# EUROPEAN PATENT APPLICATION

(11) **EP 0 627 737 A2**
(43) Date of publication of application: **07.12.1994**
(21) Application number: 94830274.0
(22) Date of filing: 03.06.1994
(51) Int. Cl.: G11B 15/093

(54) **Tape recorder mechanism for stopping the tape winding motor at the end of the winding stage**

(30) Priority: 04.06.1993 IT MC930042
(71) Applicant: SO.GE.MI.- S.p.A., Osimo Stazione (AN) (IT)
(72) Inventor: Persiani, Luigi, Osimo (AN) (IT)
(74) Representative: Baldi, Claudio

(57) **Abstract**

This invention concerns a tape recorder mechanism characterized by a single control lever that automatically stops the tape winding motor at the end of the winding stage.

Said lever is oscillated during play-back and fast rewind of the tape by the combined and synchronized action of two cams, both driven by means of gears, by the same pinion that winds the tape.

## Description

This invention concerns a tape recorder mechanism for stopping the tape winding motor at the end of the winding stage.

The peculiarity of the mechanism according to the invention being that it operates by means of a single control lever instead of the two or more levers generally used on similar standard mechanisms currently available.

The mechanism according to the invention consists of an oscillating lever that during play-back and fast rewinding of the tape is oscillated around its pivoting pin by means of the combined and synchronized action of two rotating cams which interfere alternatively and in opposite directions on two different points of the lever thereby producing a brief rotation, in clockwise and anti-clockwise direction respectively.

The first cam consists of a frictioning lever pivoted with a slight interference on clutch pinion so that said lever is rotated (together with the clutch) by the latter when the same does not undergo a braking force, thereby causing the same to stop immediately and being dragged on the clutch pinion to which it returns spontaneously and solidly upon termination of the braking action of the resisting force.

The second cam consists of a revolving disk having a hooked prong along the perimeter fitted on the pin of a geared wheel engaging with the pinion which winds the tape during play-back.

Said cam rotates and is housed in a practically elliptical slot on the body of the above oscillating control lever.

The perimeter of said slot having a tooth shaped so as to be engaged, upon interference, by the hooked prong of the above revolving disk.

During play-back and fast rewind of the tape, said oscillating control lever is oscillated around its own pivoting pin by the alternating and opposing thrusting action of the two above cams: the hooked prong of the second cam in fact pushes against the edge of the slot in which the cam is housed thereby causing a brief rotation of the lever in one direction, while the first cam, namely that fitted on the clutch pinion, causes a rotation of the lever in the opposite direction whenever it interferes with the same.

It is important to note that the mechanism according to the invention is designed to ensure that while the first cam applies timed thrusts on the oscillation lever, the hooked prong of the second cam will not engage the tooth along the edge of the slot in which the second cam revolves in that the first cam rotates the oscillating lever in a direction that consistently draws the tooth of the slot away from the hooked prong.

Upon termination of the pressing action of the first cam, the hooked prong of the second cam during its rotation will have the tooth of the slot positioned in front of it so as to be engaged by the prong, thereby pulling forward the oscillating lever whose appendix interferes with the micro-switch that stops the tape winding motor.

The action of the first cam terminates when the clutch pinion stops at the end of the tape winding phase.

The winding motor starts automatically as soon as the oscillating lever, or rather its appendix, is drawn away by the micro-switch with consequent release of the hooked prong by the relevant holding tooth; it should be noted in this regard that the oscillating lever is constantly subject to the action of a return spring that retracts the oscillating lever upon the above disengaging phase so that the hooked prong passes over the relevant holding tooth, with which it can no longer interfere until such time as the hammering action of the first cam ceases.

The mechanism according to the invention also indirectly prevents the inconvenience of "tape bunching", which occurs when tape winding motor operates even when the tape has accidently not been wound with consequent tangling and bunching of the tape immediately after the pair of rollers which wind the tape at a preset speed.

This problem occurs when the teeth on the two hubs of the two winding reels of the tape cassette accidentally stop against the teeth of the pinion of the clutch, thereby causing a forced coupling that prevents the clutch to rotate its corresponding winding reel, thereby causing the tape to "bunch".

The problem can be prevented by means of the device according to the invention in that when the pinion of the clutch stops, whatever the reason, the oscillating lever immediately stops the tape winding motor.

For major clarity the description of the invention continues with reference to the enclosed drawings which are intended for purposes of illustration and not in a limiting sense where:

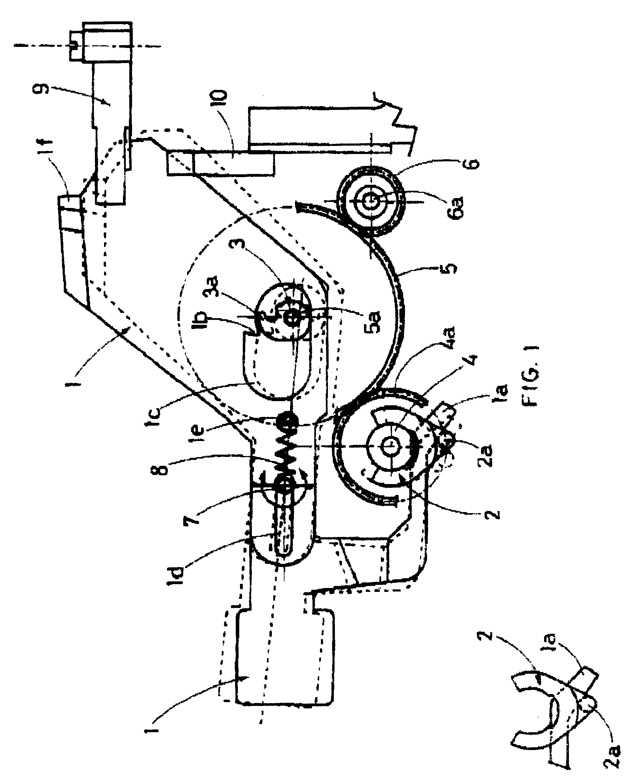

- fig. 1 illustrates the oscillation of the oscillating lever during the play-back or fast rewind of the tape;

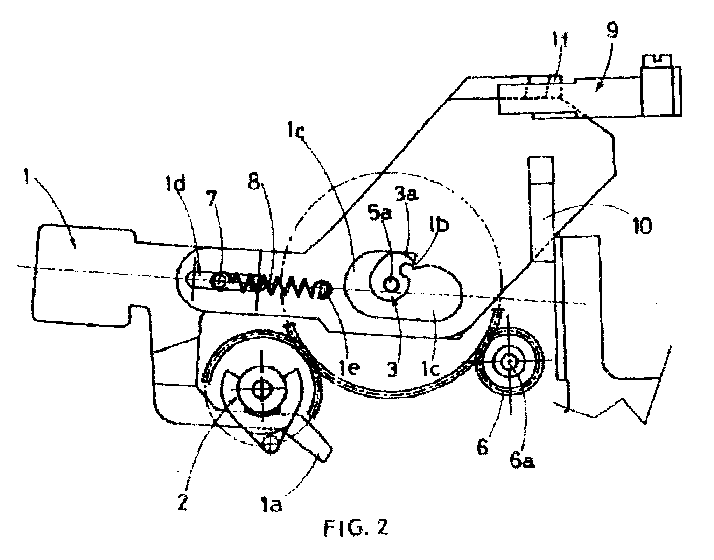

- fig. 2 illustrates the position at which the oscillating lever stops at the end of the tape winding phase;
- fig. 3 illustrates the disengaging phase of the oscillating lever due to activation of the tape cassette ejection sliding block.

With reference to the above figures, the mechanism according to the invention consists of an oscillating lever (1) oscillated by the combined and synchronous action of a first cam (2) and of a second cam (3).

The first cam (2) consists of a frictioning fork lever fitted on pinion (4) of the clutch, which is rotated by a geared wheel (4a) engaging with an idle running wheel that in turn engages with the driving wheel (6) whose pin (6a) winds the tape.

Said fork lever (2) being fitted with a tooth (2a) that presses continually against an appendix (1a) of the oscillating lever (1) with sufficient force to rotate the same only if the latter (1) is free to oscillate, while lever (2) drags on pinion (4) of the clutch whenever the oscillating lever (2) opposes the same.

The second cam (3) consists of a disk having a hooked prong (3a) along the perimeter that engages a striking tooth (1b) on the profile of a through slot (1c) having a practically elliptical shape, on the body of the oscillating lever (1).

Said cam (3) being housed in said slot (1c) and keyed on pin (5a) of the idle running wheel (5) so that said cam (3) is rotated for as long as the tape is wound by pin (6a), while said cam (3) stops whenever the electric motor operating pin (6a) stops.

The oscillating lever (1) is pivoted on a fixed pin (7) fitted in a slot (1d) of the oscillating lever (1) which can therefore also translate with respect to its pivoting pin (7).

A pre-stretched spring (8), hooked to pin (7) and on tooth (1e) of lever (1), constantly retracts lever (1) preventing the same, during oscillation, from sliding forward and interfering with the micro-switch (9) that, when opposed, immediately stops the tape winding motor.

As mentioned in the introduction, when the pinion (4) of the clutch stops at the end of the tape winding phase, cam (2) no longer pushes against the oscillating lever (1) so that the hooked prong (3a) engages the holding tooth (1b) and pulls lever (1) forward sufficiently to ensure that the appendix (1f) of the latter interferes with the micro-switch (9), thereby stopping the tape winding motor immediately.

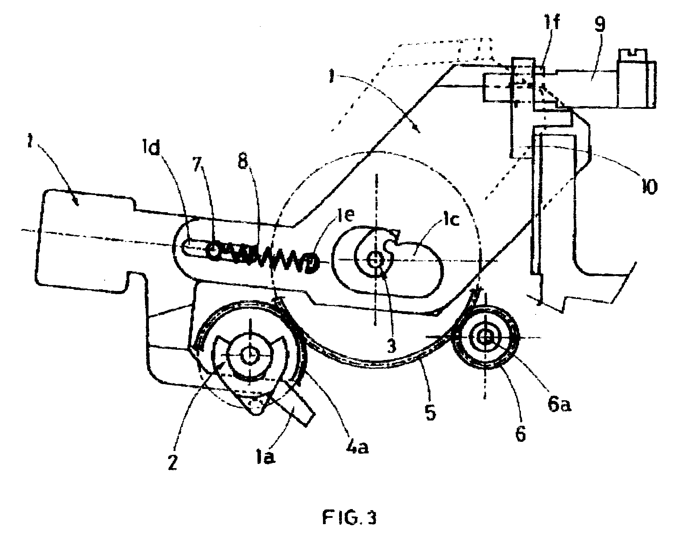

Fig. 3 shows that by pressing the cassette-ejection sliding block (10), the hooking tooth (3a) disengages from the holding tooth (1b) as a result of the interference of the cassette ejection sliding block (10) with appendix (1f) of the oscillating lever (1).

Fig. 3 also shows that when the ejection sliding block (10) interferes with the appendix (1f) it presses against the micro-switch (9), thereby taking the place of the appendix (1f) so that the tape winding motor will in fact not start up since there is no tape inserted in the tape recorder.

When a tape is inserted in the tape recorder, the ejection sliding block (10) automatically moves backwards, thereby automatically starting the motor and oscillation of the lever (1) by means of the combined and synchronous action of cams (2 and 3).

Lastly, it should be noted that the mechanism in question is designed for use on tape winding mechanisms without a device for automatically reversing the tape winding direction.

In other words, the mechanism according to the invention is designed for tape recorders where the tape must be removed, turned over and re-inserted in the tape recorder at the end of the tape in order to play the other side.

## Claims

1. A tape recorder mechanism for stopping the tape winding motor at the end of the winding stage consisting of:
- an oscillating lever (1) pivoted on a fixed pin (7) fitted into slot (1d) of the oscillating lever (1), translating with respect to its own pivoting pin (7) and overcoming the resistance produced by a return spring (8) hooked to pin (7) and on a tooth (1e) of the lever (1) with an almost elliptical through slot (1c) having a tooth (1b) along the edge; said lever (1) being fitted with an appendix (1f) interfering with the micro-switch (9) when the lever (1) translates forwards, thereby stopping the tape winding motor;
- a first cam (2) consisting of a fork frictioning lever fitted on pinion (4) of the clutch and having a tooth (2a) that presses continuously against an appendix (1a) of the oscillating lever (1) with sufficient force to rotate the same only when the latter (1) is free to oscillate;
- a second cam (3) consisting of a disk having a hooked prong (3a) along the perimeter, housed and rotating in a through slot (1c) of the lever (1); said cam (3) being keyed on the pin (5a) of an idle running wheel (5) engaging both with the drive wheel (6) whose pin (6a) winds the tape and with the driven gear (4a) keyed on the pinion (4) of the clutch; the combined and alternating action of cams (2 and 3) occurring in such a way as to determine that while the first cam (2) performs timed thrusts on the oscillation lever (1), the hooked prong (3a) of the second cam (3) can not engage the tooth (1b) on the edge of the slot (1c).

2. A tape recorder mechanism for stopping the tape winding motor at the end of the winding stage according to claim 1) consisting of:
a cassette-ejection sliding block (10) that, when pressed, releases the hooking tooth (3a) of the corresponding holding tooth (1b) by interfering with the appendix (1f) of the oscillating lever; said ejection sliding block (10), in interfering with appendix (1f), presses against the micro-switch (9), thereby taking the place of the appendix (1f).
